# EUROPÄISCHE PATENTANMELDUNG

(11) **EP 4 846 834 A1**
(43) Veröffentlichungstag der Anmeldung: **02.12.2026**
(21) Anmeldenummer: 26180081.7
(22) Anmeldetag: 21.05.2026
(51) Int. Cl.: A01D 34/416

(54) **RASENTRIMMER UND VERFAHREN ZUR WIEDERBEFÜLLUNG EINES FADENSPEICHERS EINES RASENTRIMMERS**

(30) Priorität: 28.05.2025 DE 102025120953
(71) Anmelder: Andreas Stihl AG & Co. KG, 71336 Waiblingen (DE)
(72) Erfinder: Herrmann, Frederik, 71334 Waiblingen (DE); Nülle, Jana, 71686 Remseck am Neckar (DE); Knoll, Viktor, 71686 Remseck am Neckar (DE); Maier, Matthias, 71334 Waiblingen (DE)

(57) **Zusammenfassung**

Es wird ein Rasentrimmer (1) angegeben, umfassend einen um eine Rotationsachse (80) antreibbaren Mähkopf (10), einen Antriebsmotor (4), einen Fadenspeicher (30), wobei der Fadenspeicher (30) außerhalb des Mähkopfs (10) an dem Rasentrimmer (1) angeordnet ist, einen Fadenkanal (60), wobei der Fadenkanal (60) ausgebildet ist, ein zweites Ende (72) des Mähfadens (70), das in den Mähkopf (10) eingeführt wird, bis in den Fadenspeicher (30) zu führen, eine Fadenvorschubeinheit (40), die ausgebildet ist, auf einen zwischen dem Fadenspeicher (30) und dem Mähkopf (10) befindlichen Abschnitt (63) des Mähfadens (70) einzuwirken, wobei die Fadenvorschubeinheit (40) einen Nachstellmodus, einen Nachfüllmodus und einen Inaktivitätsmodus aufweist, wobei im Nachstellmodus Mähfaden (70) aus dem Fadenspeicher (30) zu dem Mähkopf (10) gefördert wird und wobei im Nachfüllmodus Mähfaden (70) aus dem Mähkopf (10) zu dem Fadenspeicher (30) gefördert wird und wobei im Inaktivitätsmodus eine Förderung des Mähfadens (70) deaktiviert ist, eine Steuerung, die den Betrieb der Fadenvorschubeinheit (40) steuert, ein Bedienelement (47), durch das der Nachfüllmodus der Fadenvorschubeinheit (40) aktiviert wird. Weiterhin wird eine Verfahren zur Wiederbefüllung eines Fadenspeichers (30) eines derartigen Rasentrimmers (1) vorgeschlagen.

## Beschreibung

Die Erfindung betrifft einen Rasentrimmer zum Schneiden von Vegetation und ein Verfahren zur Wiederbefüllung eines Fadenspeichers eines Rasentrimmers.

Aus dem Stand der Technik sind Rasentrimmer bekannt, die einen Mähkopf mit mindestens einem aus dem Mähkopf herausragenden Ende eines Mähfadens zum Schneiden von Gras, Gestrüpp und dergleichen aufweisen. Der Mähfaden verschleißt durch den Kontakt zum Schnittgut. Wenn der herausragende Mähfaden eine Mindestlänge unterschritten hat, muss er nachgestellt werden. Hierzu sind bei Mähköpfen mit innerhalb des Mähkopfs angeordneter Spule, sogenannten Spulenmähköpfen, verschiedene Mechanismen zum Nachstellen bekannt. Grundsätzlich beruhen alle Mechanismen auf einer Umschaltvorrichtung im Mähkopf, die beim Nachstellen eine Relativdrehung von Mähkopf und Spule freigibt und sonst unterbindet. Die Menge des speicherbaren Mähfadens ist bei Spulenmähköpfen durch die Größe des Mähkopfs limitiert. Ein weiterer Nachteil derartiger Mähköpfe besteht darin, dass ein Nachstellen von Mähfaden nicht mehr zuverlässig möglich ist, wenn der Mähfaden beispielsweise unmittelbar an der Mähkopfgehäuseöffnung abgerissen ist oder sich benachbarte Mähfadenwicklungen durch Relativbewegungen miteinander verschweißt haben oder sich eine Mähfadenwicklung derart über eine andere Mähfadenwicklung gelegt und zusammengezogen hat, dass dadurch ein Abwickeln verhindert ist. Aus der US 4,211,004 A ist ein Rasentrimmer mit einer außerhalb des Mähkopfs angeordneten Spule bekannt. Die Nachstellung des Mähfadens erfolgt in dem die Spule durch einen Mechanismus von dem Bediener gedreht wird und so Mähfaden von der Spule abgewickelt wird. Um die abgewickelte Länge Mähfaden schließlich noch in den Mähkopf nachzustellen, muss eine Zugkraft, wie beispielsweise die Zentrifugalkraft, auf das freie Ende des Mähfadens wirken. Wirkt keine Zugkraft auf das Ende des Mähfadens, beispielsweise weil der Rasentrimmer außer Betrieb ist, kann sich eine durch das Abwickeln gebildete Fadenschlaufe im Gehäuse verheddern.

Weiterhin sind aus den Offenlegungsschriften US 2009 / 0 217 637 Al, DE 28 07 828 Al sowie CN 107278494 A Rasentrimmer bekannt, die eine außerhalb des Mähkopfs angeordnete Spule aufweisen. Über eine Vorschubeinheit und einen Fadenkanal wird Mähfaden zum Mähkopf gefördert. Manche der Vorschubeinheiten können Mähfaden, der versehentlich zu viel gefördert wurde, wieder zurückziehen.

Es besteht die Aufgabe einen bezüglich der genannten Nachteile zumindest teilweise verbesserten Rasentrimmer anzugeben. Diese Aufgabe wird durch den in Anspruch 1 angegebenen Rasentrimmer gelöst. Weiterhin besteht die Aufgabe ein Verfahren zur Wiederbefüllung eines Fadenspeichers eines derartigen Rasentrimmers anzugeben. Diese Aufgabe wird durch das in Anspruch 12 angegebene Verfahren gelöst.

Der Rasentrimmer weist einen Antriebsmotor, insbesondere einen Elektromotor, zur Rotation eines Mähkopfs um eine Rotationsachse auf. Der Antriebsmotor treibt den Mähkopf hierbei unmittelbar oder mittelbar, insbesondere über ein Getriebe und/ oder eine flexible Welle, an. Aus dem Mähkopf ragt ein erstes Ende eines Mähfadens zum Schneiden von Vegetation heraus. Der Mähfaden besitzt ein erstes Ende und ein zweites Ende, zwischen denen sich der Mähfaden mit einer Länge erstreckt. Das erste Ende ragt aus dem Mähkopf heraus und verkürzt sich durch Verschleiß. Das zweite Ende nähert sich bei dem Nachstellen von Mähfaden dem ersten Ende an. Der Rasentrimmer besitzt einen außerhalb des Mähkopfs angeordneten Fadenspeicher zur Aufnahme eines Vorrats des Mähfadens. Der Fadenspeicher ist insbesondere ausgebildet einen Vorrat des Mähfadens von mindestens zwei Metern, insbesondere mehr als vier Metern, Länge aufzunehmen. Zwischen dem Mähkopf und dem Fadenspeicher verläuft ein Fadenkanal zur Führung des Mähfadens. Der Fadenkanal ist ausgebildet ein zweites Ende des Mähfadens, das in den Mähkopf eingeführt wird, bis in den Fadenspeicher zu führen. Der Fadenkanal kann sich aus mehreren Abschnitten zusammensetzen. Der Fadenkanal kann Unterbrechungen aufweisen, wobei deren Größe und Anordnung so gewählt ist, dass eine zuverlässige Führung des Mähfadens bis in den Fadenspeicher hinein weiterhin sichergestellt ist.

Der Rasentrimmer umfasst eine Fadenvorschubeinheit. Die Fadenvorschubeinheit ist entlang des Fadenkanals zwischen dem Mähkopf und dem Fadenspeicher angeordnet. Die Fadenvorschubeinheit wirkt auf den Mähfaden ein. Der Fadenkanal ist insbesondere im Bereich der Fadenvorschubeinheit unterbrochen, sodass die Fadenvorschubeinheit unmittelbar auf den Mähfaden einwirkt. Die Fadenvorschubeinheit weist einen Nachstellmodus, einen Nachfüllmodus und einen Inaktivitätsmodus auf. Die Fadenvorschubeinheit ist ausgebildet den Mähfaden zu fördern, wobei im Nachstellmodus Mähfaden aus dem Fadenspeicher zu dem Mähkopf in einer Nachstellrichtung gefördert wird und wobei im Nachfüllmodus Mähfaden aus dem Mähkopf zu dem Fadenspeicher in einer Nachfüllrichtung gefördert wird. Im Inaktivitätsmodus ist eine Förderung des Mähfadens deaktiviert. Insbesondere blockiert die Fadenvorschubeinheit im Inaktivitätsmodus eine Bewegung des Mähfadens in Nachstellrichtung.

Dadurch, dass sich der Fadenkanal zwischen dem Mähkopf und dem Fadenspeicher erstreckt und die Fadenvorschubeinheit auf einen zwischen den Mähkopf und dem Fadenspeicher angeordneten Abschnitt des Mähfadens einwirkt, führt eine Förderung einer Länge an Mähfaden aus dem Fadenspeicher zwangsweise zu einer Förderung dieser Länge an Mähfaden in den Mähkopf. Durch die Fadenvorschubeinheit wird nur so viel Länge an Mähfaden aus dem Fadenspeicher entnommen, wie auch in den Mähkopf gefördert wird. Dadurch ist eine ungewollte Schlaufenbildung außerhalb des Fadenspeichers vermieden. Der Fadenkanal weist insbesondere eine lichte Weite von höchstens der doppelten Dicke des Mähfadens auf, sodass auch eine durch Stauchung des Mähfadens verursachte Schlaufenbildung innerhalb des Fadenkanals vermieden ist.

Dadurch, dass der Fadenspeicher außerhalb des Mähkopfes angeordnet ist, wirken keine durch die Dynamik des rotierenden Mähkopfs bedingten Kräfte unmittelbar auf den gespeicherten Mähfaden, sodass ein Verschweißen benachbarter Wicklungen des im Fadenspeicher gespeicherten Vorrats an Mähfaden weitestgehend ausgeschlossen, insbesondere vermieden, ist.

Dadurch, dass die Fadenvorschubeinheit auf einen Abschnitt des Mähfadens einwirkt, der sich zwischen dem Mähkopf und dem Fadenspeicher befindet und die Förderung des Mähfadens in den Mähkopf unabhängig von einer Zugkraft auf den Mähfaden durch die Fadenvorschubeinheit und den Fadenkanal erfolgt, lässt sich Mähfaden selbst dann zuverlässig nachstellen, wenn der Mähfaden unmittelbar am Mähkopf abgerissen ist.

Der Rasentrimmer umfasst eine Steuerung, die den Betrieb der Fadenvorschubeinheit steuert. Insbesondere umfasst die Fadenvorschubeinheit einen Vorschubmotor, dessen Betrieb von der Steuerung gesteuert wird. Der Vorschubmotor ist insbesondere als Elektromotor ausgebildet, dem ein Getriebe nachgeschaltet sein kann. Insbesondere veranlasst die Steuerung den Vorschubmotor im Nachstellmodus in einer ersten Drehrichtung und im Nachfüllmodus in einer zur ersten Drehrichtung gegensätzlichen zweiten Drehrichtung zu drehen. Insbesondere aktiviert die Steuerung den Nachstellmodus, insbesondere automatisch, wenn eine Länge des aus dem Mähkopf herausragenden Mähfadens eine Mindestlänge unterschreitet. Dem Fachmann sind verschiedene Methoden bekannt, um zu erfassen, zu berechnen oder darauf zu schließen, dass die Länge des herausragenden Mähfadens die Mindestlänge unterschreitet bzw. unterschritten hat. Es kann vorgesehen sein, dass der Nachstellmodus auch aufgrund anderer Signale, beispielsweise einer Bedienereingabe, aktiviert wird.

Der Rasentrimmer umfasst ein Bedienelement, durch das der Nachfüllmodus der Fadenvorschubeinheit aktiviert wird. Das Bedienelement kann als Schalter, Taster, Sensor oder dergleichen Element ausgebildet sein, auf das der Bediener direkt oder indirekt einwirkt. Unter einer indirekten Einwirkung des Bedieners wird beispielsweise verstanden, dass der Bediener den Mähfaden durch den Mähkopf hindurch in den Fadenkanal hineinschiebt und der Mähfaden hierbei ein Bedienelement betätigt.

Dadurch, dass der Fadenkanal derart ausgebildet ist, dass er den Mähfaden zuverlässig von dem Mähkopf in den Fadenspeicher führt und die Fadenvorschubeinheit einen Nachfüllmodus aufweist, kann der entleerte Fadenspeicher auf einfache Weise wieder befüllt werden. Hierfür schiebt der Bediener das zweite Ende eines im späteren Betrieb zu verwendenden Mähfadens in den Mähkopf ein, bis der Mähfaden die Fadenvorschubeinheit erreicht. Durch Aktivierung des Nachfüllmodus fördert die Fadenvorschubeinheit den Mähfaden in Nachfüllrichtung in den Fadenspeicher hinein. Die Aktivierung des Nachfüllmodus kann durch Betätigung des Bedienelements durch den Bediener oder durch mittelbare Betätigung des Bedieners durch Einschieben des Mähfadens erfolgen. Die Abschaltung des Nachfüllmodus kann durch Loslassen oder erneute Betätigung des Bedienelements oder eines anderen Bedienelements durch den Bediener erfolgen. Auch andere Abschaltbedingungen können vorgesehen sein. Beispielsweise kann vorgesehen sein, dass die durch die Fadenvorschubeinheit geförderte Länge des Mähfadens erfasst und ausgewertet wird und eine Abschaltung, insbesondere automatisch, erfolgt, wenn eine maximal im Fadenspeicher speicherbare Fadenlänge erreicht oder überschritten ist. Es kann alternativ oder ergänzend vorgesehen sein, dass eine Betriebsgröße der Fadenvorschubeinheit, wie Stromaufnahme oder Moment, erfasst wird und bei einer Abweichung von einem Sollzustand der Nachfüllmodus, insbesondere automatisch, deaktiviert wird. Insbesondere ist die Steuerung ausgebildet den Betrieb von Nachstellmodus und Nachfüllmodus zu steuern.

Das Verfahren zur Wiederbefüllung des Fadenspeichers des Rasentrimmers umfasst die Schritte, dass die die Steuerung erfasst, ob das Bedienelement betätig ist, und bei betätigtem Bedienelement den Nachfüllmodus aktiviert, und dass die Fadenvorschubeinheit Mähfaden vom Mähkopf aus in Nachfüllrichtung in den Fadenspeicher fördert.

Die Betätigung des Bedienelements kann hierbei durch den Benutzer oder den Mähfaden selbst erfolgen. In einer Ausführungsform ist vorgesehen, dass die Steuerung den Nachfüllmodus deaktiviert, wenn mindestens eine Abschaltbedingung erfüllt ist.

In einer Ausführungsform ist der Fadenkanal mindestens in einem Abschnitt seiner Länge aus einem biegsamen Schlauch, insbesondere aus einem Kunststoffmaterial oder einem Gummimaterial, gebildet. Eine durch den Betrieb des Rasentrimmers bedingte Schwingungsanregung des Mähfadens wird durch den Schlauchabschnitt gedämpft.

In einer Ausführungsform weist der Fadenspeicher einen Boden, einen dem Boden gegenüberliegenden Deckel und einer sich dazwischen erstreckenden Umfangswand auf. Der Boden kann insbesondere eben oder gewölbt verlaufen. Der von der Fadenvorschubeinheit in Nachfüllrichtung geförderte Mähfaden kann auf einfache Weise in dem Fadenspeicher aufgenommen werden, in dem das zweite Ende durch eine Öffnung des Fadenspeichers in den Fadenspeicher eintritt. Die Öffnung ist insbesondere am Boden des Fadenspeichers und beabstandet zur Umfangswand angeordnet. Der Mähfaden wird durch ein und dieselbe Öffnung in den Fadenspeicher hinein und aus dem Fadenspeicher heraus gefördert. Der Vorrat des Mähfadens ist insbesondere aufgewickelt, insbesondere gegen die Umfangswand des Fadenspeichers gewickelt. Der Fadenspeicher ist insbesondere frei von einer Fadenspule, auf die der Mähfaden gewickelt ist. Ein Einfädeln des zweiten Endes an eine Spule oder dergleichen ist nicht erforderlich. Der Fadenspeicher muss zum Nachfüllen des Mähfadens nicht geöffnet werden. Es kann aber vorgesehen sein, dass der Fadenspeicher öffenbar ist. Insbesondere ist der Deckel öffenbar. Dadurch kann der Fadenspeicher auf eine alternative Weise mit Mähfaden befüllt werden und/oder noch im Fadenspeicher befindlicher Mähfaden auf einfache und schnelle Weise komplett entnommen werden, beispielsweise wenn ein Wechsel auf einen anderen Mähfaden erfolgen soll. Es kann vorgesehen sein, dass sich mittig im Fadenspeicher, insbesondere von dem Deckel aus, ein insbesondere konischer Dorn in Richtung auf die Öffnung in den Fadenspeicher hinein erstreckt. Der Dorn ist ausgebildet, das durch die Öffnung in den Fadenspeicher eintretende zweite Ende des Mähfadens auf den Umfang des Fadenspeichers zu lenken. Der Dorn begünstigt das Anlegen des Mähfadens an die Umfangswand des Fadenspeichers.

In einer Ausführungsform ist an dem Abschnitt des Fadenkanals, der sich zwischen der Fadenvorschubeinheit und dem Fadenspeicher erstreckt benachbart zur Fadenvorschubeinheit ein Fadenfangtrichter angeordnet. Durch den Fadenfangtrichter wird das im Nachfüllmodus aus der Fadenvorschubeinheit austretende zweite Ende des Mähfadens aufgefangen und in den Fadenkanal bzw. Fadenspeicher geleitet. Es kann vorgesehen sein, dass der Fadenfangtrichter an dem Boden des Fadenspeichers angeordnet oder ausgebildet ist und in die Öffnung des Fadenspeichers mündet. Der Abschnitt des Fadenkanals, der sich zwischen der Fadenvorschubeinheit und dem Fadenspeicher erstreckt, kann insbesondere vollständig durch den Fadenfangtrichter gebildet sein.

Ein sich zwischen dem Mähkopf und der Fadenvorschubeinheit erstreckender Abschnitt des Fadenkanals weist insbesondere eine Länge von weniger als 30 cm, insbesondere weniger als 20 cm, auf. Einerseits ist dadurch die manuell von dem Bediener in Nachfüllrichtung in den Mähkopf einzuschiebende Fadenlänge, bis das zweite Fadenende die Fadenvorschubeinheit erreicht hat und damit schließlich eine Förderung des Mähfadens durch die Fadenvorschubeinheit erfolgen kann, minimiert. Andererseits ist dadurch auch eine nicht mehr durch die Fadenvorschubeinheit fixierbare Restlänge des Mähfadens minimiert. Denn sobald durch das Nachstellen des Mähfadens in Nachstellrichtung das zweite Ende des Mähfadens die Fadenvorschubeinheit passiert hat, ist der Mähfaden nicht mehr durch die Fadenvorschubeinheit fixiert.

In einer Ausführungsform weist der Rasentrimmer ein Führungsrohr auf, an dessen benutzerfernen Ende ein Gehäuse angeordnet ist, in oder an dem die Fadenvorschubeinheit angeordnet ist. An einer Unterseite des Gehäuses, die im Betrieb des Rasentrimmers dem Erdboden zugewandt ist, ist der Mähkopf angeordnet. Die Fadenvorschubeinheit umfasst insbesondere mindestens eine durch den Vorschubmotor drehend angetriebene Antriebsrolle und einen Gegenhalter. Der Gegenhalter ist insbesondere ebenfalls als eine drehbar gelagerte Rolle ausgebildet. Der als Rolle ausgebildete Gegenhalter kann ebenfalls von dem Vorschubmotor angetrieben sein und damit eine Antriebsrolle bilden. Im Nachstellmodus der Fadenvorschubeinheit wird die Antriebsrolle in einer ersten Drehrichtung angetrieben und der Mähfaden dadurch in Nachstellrichtung gefördert. Im Nachfüllmodus der Fadenvorschubeinheit wird die Antriebsrolle in einer zweiten Drehrichtung angetrieben und der Mähfaden dadurch in Nachfüllrichtung gefördert.

In einer Ausführungsform umfasst die Fadenvorschubeinheit eine Klemmvorrichtung, die die mindestens eine angetriebene Antriebsrolle und den mindestens einen Gegenhalter umfasst. Die Klemmvorrichtung ist insbesondere ausgebildet, im Inaktivitätsmodus der Fadenvorschubeinheit eine Auszugskraft des Mähfadens aus dem Mähkopf von mindestens 100 N bereitzustellen. Das heißt ein Herausziehen des Mähfadens aus dem Mähkopf ist blockiert, solange die Auszugskraft unter 100 N beträgt. Die Fadenvorschubeinheit kann weitere auf den Mähfaden einwirkende Rollen, Antriebsrollen, Gegenhalter oder Führungselemente aufweisen, um den Kontakt zwischen Mähfaden und Fadenvorschubeinheit zu vergrößern. Durch eine Strukturierung, ganz insbesondere Verzahnung, am Umfang der drehbaren Rolle und/oder der Antriebsrolle lässt sich die erforderliche Auszugskraft zum Auszug des Mähfadens weiter erhöhen. Bei einer Strukturierung, insbesondere Verzahnung, des Umfangs der Antriebsrolle lässt sich die punktuelle Belastung am Umfang des Mähfadens durch eine Vergrößerung des Durchmessers der Antriebsrolle und/oder eine Vergrößerung eines Umschlingungswinkels reduzieren, da hierdurch gleichzeitig mehr Kontaktstellen der Antriebsrolle, insbesondere Zähne, mit dem Mähfaden im Eingriff sind und sich dadurch die punktuelle Belastung des Mähfadens reduziert. Hierdurch lässt sich die Haltbarkeit des Mähfadens steigern. Der Umschlingungswinkel gibt an, über welchen Umfangswinkel der Antriebrolle der Mähfaden an der Antriebsrolle anliegt. Der Umschlingungswinkel ist bei gestrafftem Mähfaden, also bei Einwirkung einer Zugkraft auf das erste Ende des Mähfadens, gemessen. In einer Ausführungsform ist die Fadenvorschubeinheit derart ausgebildet, dass der Mähfaden einen Umfang der Antriebsrolle über einen Umschlingungswinkel von mehr als 30°, insbesondere mehr als 40°, ganz insbesondere mehr als 60°, umschlingt. In einer Ausführungsform umfasst die Fadenvorschubeinheit ein Führungselement, das ein in Nachfüllrichtung in den Mähkopf eingeführtes zweites Ende des Mähfadens durch die Fadenvorschubeinheit führt, insbesondere um den Umschlingungswinkel um die Antriebsrolle herumführt.

Je größer der Umschlingungswinkel ist, umso größer ist die Reibung zwischen dem Mähfaden und der Antriebsrolle. In einer Ausführungsform beträgt ein Durchmesser der Antriebsrolle mindestens das 10-fache, insbesondere mindestens das 15-fache, eines Durchmessers des Mähfadens. Dies ist besonders vorteilhaft, wenn der Umschlingungswinkel mehr als 60° beträgt. Auf diese Weise ist der Krümmungsradius, um den sich der Mähfaden beim Hindurchschieben durch die Fadenvorschubeinheit im Bereich der Antriebsrolle verbiegen muss, reduziert. Dadurch lässt sich der Mähfaden selbst bei einem größeren Umschlingungswinkel leicht in Nachfüllrichtung in die Fadenvorschubeinheit einschieben.

In einer Ausführungsform ist eine Klemmkraft der Klemmvorrichtung einstellbar. Dadurch lässt sich für unterschiedlich dicke Mähfäden eine einheitliche Auszugskraft einstellen. In einer Ausführungsform ist die Klemmkraft der Klemmvorrichtung durch einen Freigabemechanismus deaktivierbar. Dadurch lässt sich das zweite Ende des Mähfadens noch leichter von dem Bediener bis in die Klemmvorrichtung der Fadenvorschubeinheit einschieben oder ein bereits am Rasentrimmer angeordneter Mähfaden manuell aus dem Rasentrimmer entfernen. Ein Betrieb des Vorschubmotors ist zum Entfernen des Mähfadens aus der Klemmvorrichtung nicht erforderlich. Durch den Freigabemechanismus wird insbesondere ein Abstand zwischen der mindestens einen Antriebsrolle und dem mindestens einen Gegenhalter derart vergrößert, dass keine Klemmkraft mehr auf den Mähfaden einwirkt.

In einer Ausführungsform ist, insbesondere zusätzlich zu der Fadenvorschubeinheit, der Fadenspeicher an oder in dem Gehäuse angeordnet. Es kann hierbei vorgesehen sein, dass der Fadenspeicher mindestens teilweise durch das Gehäuse gebildet wird. Dadurch, dass der Fadenspeicher an oder im Gehäuse angeordnet ist, verläuft der Fadenkanal zu einem Großteil seiner Länge, insbesondere vollständig, innerhalb des Gehäuses. Dies erleichtert das Ausputzen von Rändern mit dem Rasentrimmer, da ein Hängenbleiben mit dem Fadenkanal an Zweigen und dergleichen zuverlässig vermieden ist.

In einer Ausführungsform ist der Fadenspeicher mindestens teilweise durchsichtig. Der Fadenspeicher weist insbesondere an seinem Deckel und/oder seinem Umfang einen durchsichtigen Abschnitt auf, durch den der Bediener einen Füllstand des Fadenspeichers erkennen kann. Insbesondere ist der Deckel des Fadenspeichers aus durchsichtigem Kunststoff gefertigt.

In oder an dem Gehäuse ist insbesondere auch der Antriebsmotor und/oder ein Getriebe zum Antrieb des Mähkopfs angeordnet. Ein zwischen der Fadenvorschubeinheit und dem Mähkopf verlaufender Abschnitt des Fadenkanals ist mindestens teilweise durch eine hohle Welle des Antriebsmotors oder des Getriebes gebildet.

Weitere Merkmale der Erfindung ergeben sich aus der Beschreibung und der Zeichnung, in der nachstehend im Einzelnen beschriebene Ausführungsbeispiele der Erfindung wiedergegeben ist. Es zeigen:
- Fig. 1: eine Seitenansicht eines erfindungsgemäßen Rasentrimmers,
- Fig. 2: eine Seitenansicht eines Gehäuses und eines Mähkopfs des Rasentrimmers aus Fig. 1 nach einer ersten Ausführungsform,
- Fig. 3: eine Schnittdarstellung des Gehäuses und des Mähkopfs aus Fig. 2 entlang einer Schnittebene III-III in Fig. 2,
- Fig. 4: eine Detailansicht einer Fadenvorschubeinheit und eines Freigabemechanismus des Rasentrimmers aus Fig. 3,
- Fig. 5: eine teilgeschnittene Darstellung der Fadenvorschubeinheit und des Freigabemechanismus aus Fig. 4,
- Fig. 6: eine Detailansicht nach Fig. 3, jedoch mit aktiviertem Freigabemechanismus,
- Fig. 7: eine Detailansicht nach Fig. 3, mit inaktivem Freigabemechanismus,
- Fig. 8: eine Detailansicht nach Fig. 3, jedoch mit gefülltem Fadenspeicher,
- Fig. 9: eine Schnittdarstellung des Mähkopfs aus Fig. 2 entlang der Schnittebene III - III in Fig. 2,
- Fig. 10: eine Schnittdarstellung des Mähkopfs aus Fig. 2 entlang einer Schnittebene X - X in Fig. 2
- Fig. 11: eine Seitenansicht eines Gehäuses und eines Mähkopfs des Rasentrimmers aus Fig. 1 nach einer zweiten Ausführungsform,
- Fig. 12: eine Seitenansicht auf das Gehäuses und den Mähkopfs aus Fig. 11 parallel zur Ebene XIII-XIII in Fig. 11 mit abgenommener rechter Gehäusehälfte und inaktivem Freigabemechanismus,
- Fig. 13: eine Schnittdarstellung des Gehäuses und des Mähkopfs aus Fig. 12 entlang der Schnittebene XIII-XIII in Fig. 11 und inaktivem Freigabemechanismus,
- Fig. 14: eine Darstellung entsprechend Fig.12, jedoch mit aktiviertem Freigabemechanismus,
- Fig. 15: eine Darstellung entsprechend Fig.13, jedoch mit aktiviertem Freigabemechanismus.

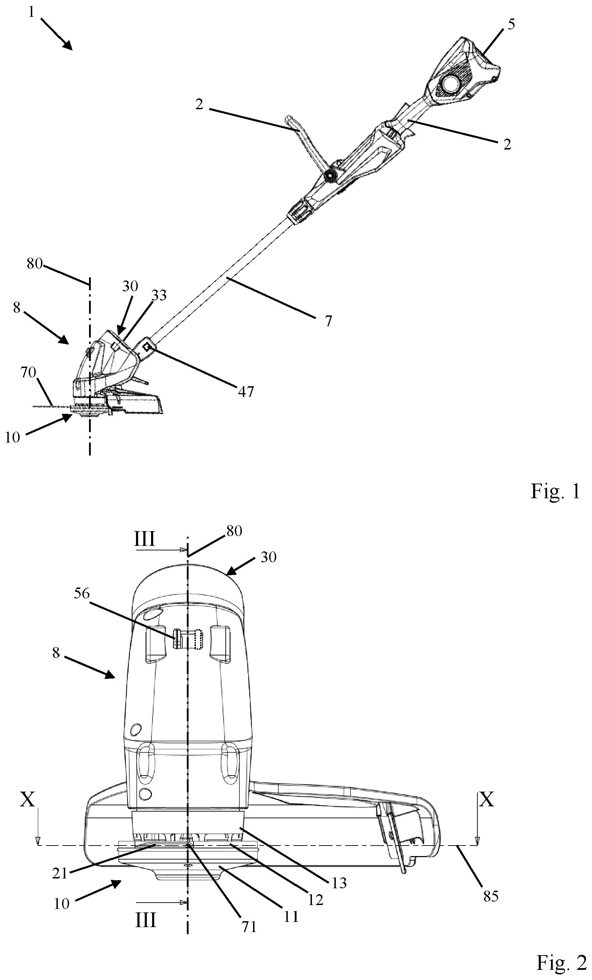

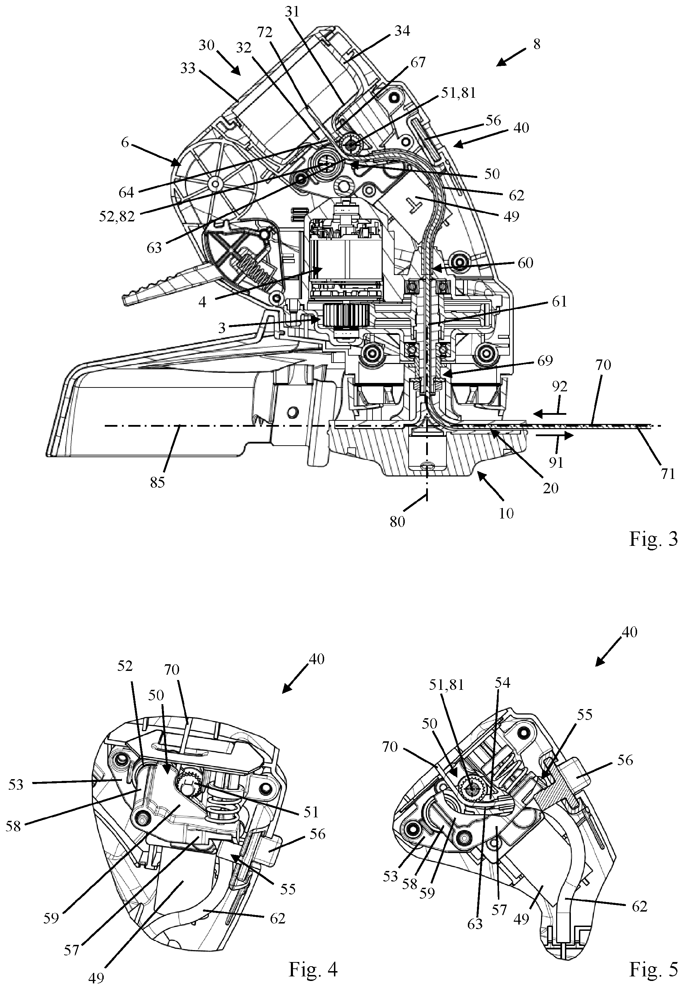

Fig. 1 zeigt einen Rasentrimmer 1 in einer üblichen Arbeitsposition. Der Rasentrimmer 1 umfasst ein Führungsrohr 7, an dem mindestens ein Handgriff 2 zum Führen des Rasentrimmers 1 angeordnet ist. An dem benutzerfernen Ende des Führungsrohrs 7 ist ein Gehäuse 8 angeordnet, an dessen dem Erdboden zugewandter Unterseite der Mähkopf 10 angeordnet ist. Aus dem Mähkopf 10 ragt ein erstes Ende 71 eines Mähfadens 70 zum Schneiden von Vegetation heraus. Der Mähkopf 10 ist durch einen Antriebsmotor 4 (Fig.3) um eine Rotationsachse 80 antreibbar. Ein Teil der Gehäuseoberfläche des Gehäuses 8 wird von einem durchsichtigen Deckel 33 eines Fadenspeichers 30 des Rasentrimmers 1 gebildet. Der Deckel 33 ist im Ausführungsbeispiel an einer zum Benutzer hin geneigten Oberseite des Gehäuses 8 angeordnet. Das Führungsrohr 7 ist schwenkbar mittels eines Schwenkgelenks 6 (Fig. 3) an dem Gehäuse 8 befestigt. Im Ausführungsbeispiel ist das Schwenkgelenk 6 unterhalb des Deckels 33 des Fadenspeichers 30 angeordnet, sodass der Deckel 33 in jeder Schwenklage des Führungsrohres 7 ergonomisch vom Benutzer einsehbar ist. Im Ausführungsbeispiel ist das Führungsrohr 7 teleskopierbar. Am benutzernahen Ende des Führungsrohrs 7 ist ein Akkumulator 5 aufgenommen, durch den der Rasentrimmer 1 mit Energie versorgt wird. Auch eine andere Anordnung des mindestens einen Akkumulators 5 am Rasentrimmer 1 oder am Benutzer, beispielsweise an einer Gürteltasche, ist möglich. In der in Fig. 1 gezeigten Arbeitsposition, die insbesondere zum Mähen von Vegetation vorgesehen ist, ist die Rotationsachse 80 des Mähkopfs 10 im Wesentlichen senkrecht zum Untergrund ausgerichtet. Der Rasentrimmer kann eine zweite Arbeitsposition aufweisen, in der die Rotationsachse 80 des Mähkopfs 10 im Wesentlichen parallel zum Untergrund ausgerichtet ist. Die zweite Arbeitsposition ist insbesondere zum sogenannten Edgen, also dem scharfkantigen Trennen von Rasenfläche und angrenzenden Bereichen wie Beeten, Wegen o.ä., vorgesehen.

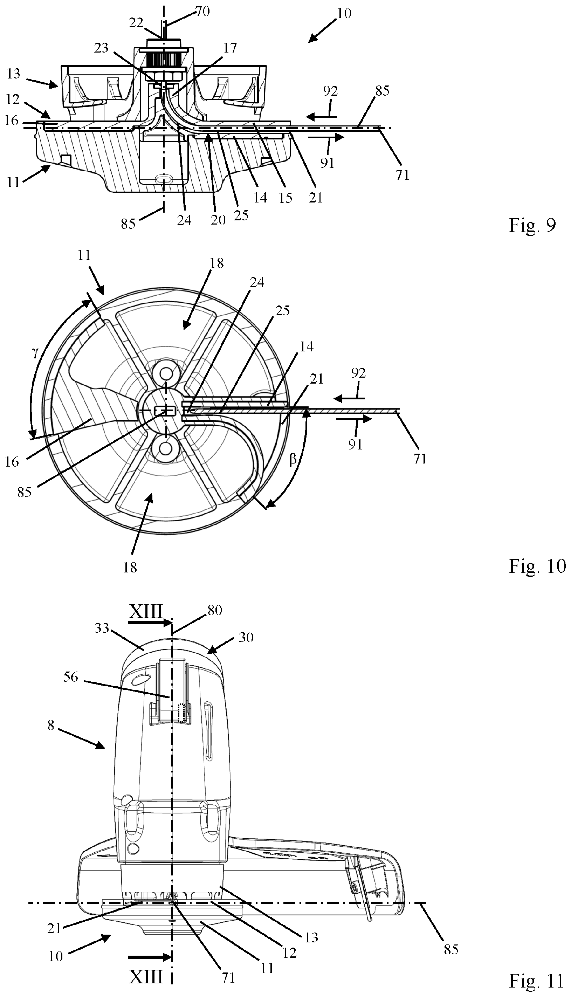

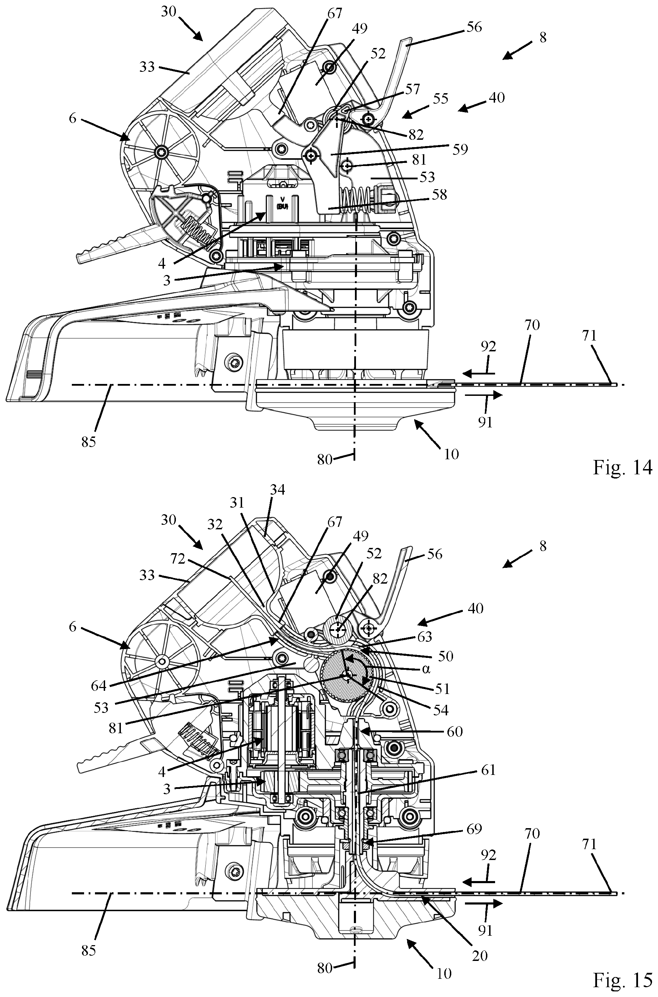

Die Fig. 2 bis 10 zeigen eine erste Ausführungsform des Rasentrimmers 1 aus Fig. 1. Die Fig. 11 bis 15 zeigen eine zweite Ausführungsform des Rasentrimmers 1 aus Fig. 1. Nachfolgend wird zunächst die erste Ausführungsform im Detail beschrieben. Um Dopplungen zu vermeiden, wird danach in der Beschreibung der zweiten Ausführungsform lediglich auf die Unterschiede zur ersten Ausführungsform eingegangen. Die zur ersten Ausführungsform getroffenen Aussagen gelten auch für die zweite Ausführungsform, sofern nicht anders angegeben. Einander entsprechende Elemente tragen die gleichen Bezugszeichen.

Wie Fig. 2 zeigt umfasst das Gehäuse 8 zwei Gehäusehalbschalen, die an einer Trennebene aneinander anliegen. Die Rotationsachse 80 verläuft parallel zur Trennebene, insbesondere in der Trennebene. Ein vom Bediener betätigbares Freigabeelement 56, dessen Funktion später im Detail beschrieben wird, ist in der Trennebene angeordnet. Durch eine derartige Anordnung lässt sich das Freigabeelement 56 auf besonders einfache Weise aus dem Gehäuse 8 herausführen, um für den Bediener von außen zugänglich zu sein. Das Freigabeelement 56 ist insbesondere fluchtend zur Rotationsachse 80 angeordnet, d.h. die Rotationsachse 80 schneidet das Freigabeelement 56. Auf diese Weise erreicht das Freigabeelement 56 einen bzgl. der Rotationsachse 80 maximalen radialen Abstand zum freien Ende 72 des Mähfadens 70 und maximalen axialen Abstand zur Schnittebene 85. Dadurch ist einerseits eine Verschmutzung des Freigabeelements 56 auf einfache Weise reduziert und das Freigabeelement 56 andererseits bequem für den Bediener erreichbar. Auch eine andere Gehäuseteilung und Anordnung des Freigabeelements 56 sind möglich.

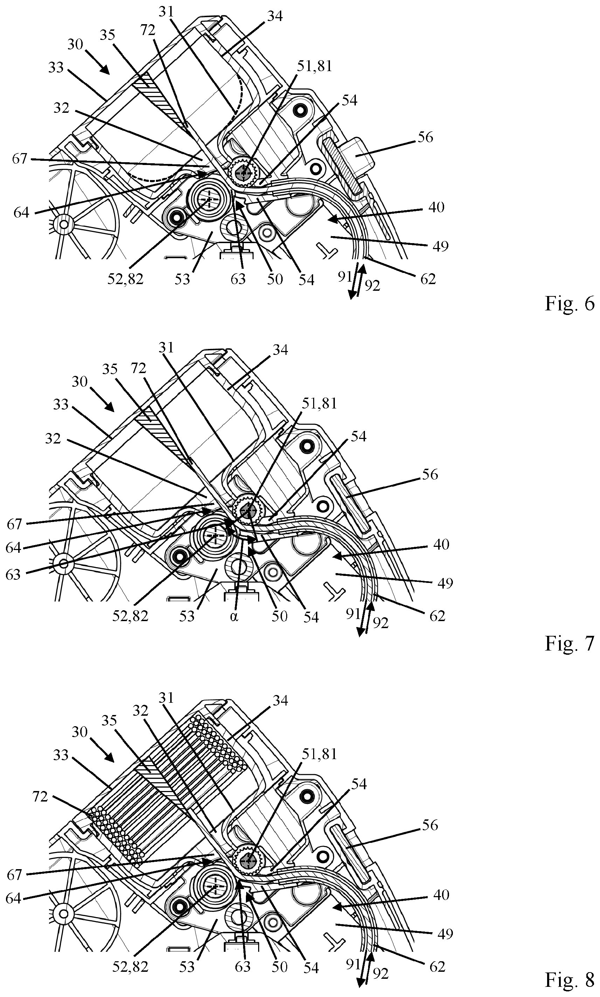

Wie Fig. 3 zeigt, ist der Fadenspeicher 30 am bzw. im Gehäuse 8 angeordnet. Der Fadenspeicher 30 umfasst einen dem Deckel 33 gegenüberliegenden Boden 31 und eine sich dazwischen erstreckende Umfangswand 34. Die Umfangswand 34 kann teilweise oder vollständig von dem Deckel gebildet sein. Der Boden 31 weist eine zentral angeordnete Öffnung 32 auf. Durch die zentral im Boden 31 angeordnete Öffnung 32 wird der Mähfaden 70 in den Fadenspeicher 30 hinein und hinaus gefördert. Der Boden 31 ist eben ausgebildet. Es ist auch möglich den Boden 31 gewölbt auszubilden, wie exemplarisch in Fig. 6 strichliert dargestellt ist. Ein Übergang zwischen der Umfangswand 34 und einem gewölbten Boden 31 kann insbesondere fließend verlaufen. In Fig. 3 ist der Fadenspeicher 30 im nahezu leeren Zustand dargestellt. Bei gefülltem Fadenspeicher 30 (Fig. 8) ist der Mähfaden 70 spulenlos gegen die Umfangswand 34 des Fadenspeichers 30 gewickelt. Der Fadenspeicher 30 weist einen insbesondere kreisförmigen Querschnitt auf, wobei die Umfangswand 34 einen Fadenspeicherdurchmesser begrenzt, der zwischen 5 cm und 15 cm, insbesondere zwischen 7 cm und 11 cm beträgt. Ist der Fadenspeicherdurchmesser zu klein, so passt sich der Mähfaden 70 während seiner Lagerung im Fadenspeicher 30 an die relativ starke Krümmung an, wodurch die späteren Gebrauchseigenschaften des Mähfadens 70 nachteilig beeinflusst werden. Ist der Fadenspeicherdurchmesser zu groß, so legt sich das in den Fadenspeicher 30 eintretende zweite Ende 72 des Mähfadens 70 und die weiter eintretende Länge an Mähfaden 70 unter Umständen nicht seiner Länge nach an die Umfangswand 34 an. Dadurch neigt der Mähfaden 70 zum Verheddern, wodurch weniger Mähfaden 70 in dem Fadenspeicher 30 gespeichert werden kann.

In dem Gehäuse 8 sind ebenfalls ein als Elektromotor ausgebildeter Antriebsmotor 4 zum Antrieb des Mähkopfs 10 und eine Fadenvorschubeinheit 40 aufgenommen. Der Antriebsmotor 4 treibt über ein Getriebe 3, dass im Ausführungsbeispiel als Stirnradgetriebe ausgebildet ist, den Mähkopf 10 im Betrieb rotierend um die Rotationsachse 80 an. Die Fadenvorschubeinheit 40 umfasst eine von einem Vorschubmotor 49 angetriebene Antriebsrolle 51 und eine drehbare, als Gegenhalter ausgebildete Rolle 52. Der Vorschubmotor 49 ist als Elektromotor mit nachgelagertem Getriebe ausgeführt. Die Antriebsrolle 51 und die Rolle 52 sind gegeneinander vorgespannt, und klemmen so den Mähfaden 70 zwischen sich ein. Die Antriebsrolle 51 und die Rolle 52 klemmen den Mähfaden 70 an einer Klemmstelle zwischen sich ein.

Die Antriebsrolle 51 und die Rolle 52 bilden eine Klemmvorrichtung 50. Wie Fig. 4 zeigt, lässt sich eine Drehachse 82 der Rolle 52 von einer Drehachse 81 der Antriebsrolle 51 entgegen einer Federkraft durch einen Freigabemechanismus 55 wegbewegen, sodass die auf den Mähfaden 70 einwirkende Klemmkraft reduziert bzw. aufgehoben wird. Zur Aktivierung des Freigabemechanismus 55 ist das Freigabeelement 56 (Fig. 2), das im ersten Ausführungsbeispiel als Schieber ausgeführt ist, zu betätigen. Durch Betätigung des Freigabeelements 56 wird ein erster Arm 57 eines Hebels um eine Lagerachse verschwenkt und dadurch ein zweiter Arm 58 des Hebels, an dem im ersten Ausführungsbeispiel die Rolle 52 gelagert ist, ebenso verschwenkt und damit ein Abstand der Drehachse 82 der Rolle 52 und der Drehachse 81 der Antriebsrolle 51 vergrößert. Es kann auch vorgesehen sein, dass der Hebel nur einen ersten Arm 57 aufweist, an dem die Rolle 52 angeordnet ist. Die Feder kann ebenfalls an dem ersten Arm 57 oder dem zweiten Arm 58 angreifen. Der Freigabemechanismus 55 befindet sich dann in einem aktivierten Zustand und die Klemmvorrichtung 50 in einem deaktivierten Zustand. Zwischen dem ersten Arm 57 und dem zweiten Arm 58 des Hebels erstreckt sich eine Versteifungsstruktur 59. Es kann vorgesehen sein, dass die Versteifungsstruktur 59 den Fadenkanal 60 in axialer Richtung bzgl. der Drehachse 81 der Antriebsrolle 51 begrenzt. In Fig. 5 ist die Versteifungsstruktur 59 ausgebrochen dargestellt, sodass der Verlauf des Fadenkanals 60 bzw. Mähfadens 70 in der Fadenvorschubeinheit 40 sichtbar ist. Die Fadenvorschubeinheit 40 besitzt einen Träger 53, der an dem Gehäuse 8 des Rasentrimmers 1 angeordnet, insbesondere befestigt, ist. An dem Träger 53 sind der Hebel, die Feder und der Vorschubmotor 49 gelagert. Es kann auch vorgesehen sein, dass der Träger 53 integral mit einem Gehäuse des Vorschubmotors 49, insbesondere einem Gehäuse eines Getriebes des Vorschubmotors 49, ausgebildet ist. Der Träger 53 weist Führungselemente 54 zur Führung des Mähfadens 70 innerhalb der Fadenvorschubeinheit 40 auf. Die Führungselemente 54 können integral mit dem Träger 53 ausgebildet sein. Im ersten Ausführungsbeispiel ist ein Ende eines zweiten Abschnitts 62 des Fadenkanals 60 mit dem Träger 53 gekoppelt. Die Führungselemente 54 sind ausgebildet, ein zweites Ende 72 des Mähfadens 70, insbesondere nach Verlassen des zweiten Abschnitts 62, in der Fadenvorschubeinheit 40 zu der Klemmvorrichtung 50 zu führen. Um eine Auszugskraft des Mähfadens 70 aus der Klemmvorrichtung 50 zu erhöhen, umschlingt der Mähfaden 70 die Antriebsrolle 51 über einen Umschlingungswinkel α der Antriebsrolle 51 von mehr als 30°, insbesondere mehr als 40° (Fig.7). Hierzu ist im ersten Ausführungsbeispiel vorgesehen, dass das Ende des zweiten Abschnitts 62 des Fadenkanals 60 derart zur Klemmvorrichtung 50 ausgerichtet ist, dass der Mähfaden 70 zwischen dem Ende des zweiten Abschnitts 62 des Fadenkanals 60 und der Klemmstelle über den Umschlingungswinkel α an dem Umfang der Antriebsrolle 51 anliegt. Im Betrieb des Rasentrimmers 1 wirkt eine Zugkraft auf das erste Ende 71 des Mähfadens 70, durch die der Mähfaden 70 zwischen der Klemmstelle und dem ersten Ende 71 gestrafft wird. Dabei wird der Mähfaden 70 über den Umfang der Antriebsrolle 51 gespannt und dadurch eine Reibung zwischen Mähfaden 70 und Antriebsrolle 51 aufgrund des Umschlingungswinkels α erhöht.

Die Antriebsrolle 51 wird in einem Nachstellmodus der Fadenvorschubeinheit 40 in einer ersten Drehrichtung von dem Vorschubmotor 49 angetrieben und der Mähfaden 70 dadurch in einer Nachstellrichtung 91 gefördert. Im einem Nachfüllmodus der Fadenvorschubeinheit 40 wird die Antriebsrolle 51 in einer zweiten Drehrichtung angetrieben und der Mähfaden 70 dadurch in einer Nachfüllrichtung 92 gefördert. Die erste und zweite Drehrichtung sind gegensätzlich zueinander. Die Nachstellrichtung 91 und die Nachfüllrichtung 92 sind gegensätzlich zueinander. Wird die Antriebsrolle 51 nicht vom dem Vorschubmotor 49 angetrieben, so befindet sich die Fadenvorschubeinheit 40 in einem Inaktivitätsmodus. Im Inaktivitätsmodus erfolgt keine Förderung des Mähfadens 70. Die Fadenvorschubeinheit 40 blockiert im Inaktivitätsmodus ein Herausziehen des Mähfadens 70 in Nachstellrichtung 91 aus dem Mähkopf 10 bis zu einer Auszugskraft von mindestens 100 N, insbesondere mindestens 150 N.

Wie Fig. 9 zeigt besitzt der Mähkopf 10 einen Mähkopfkanal 20, der sich zwischen einer Umfangsöffnung 21 am Umfang des Mähkopfs 10 und einer Zentralöffnung 22 an der Oberseite des Mähkopfs 10 erstreckt. An der Umfangsöffnung 21 ragt das erste Ende 71 des Mähfadens 70 zum Schneiden von Vegetation heraus. Wie Fig. 3 zeigt, erstreckt sich zwischen dem Mähkopf 10 und dem Fadenspeicher 30 ein Fadenkanal 60. Der Mähkopfkanal 20 und der Fadenkanal 60 gehen an einer Koppelstelle 69 ineinander über. Durch den Fadenkanal 60 wird der Mähfaden 70 von dem Mähkopf 10 zu dem Fadenspeicher 30 geführt. Der Fadenkanal 60 setzt sich aus mehreren Abschnitten zusammen. Der Fadenkanal 60 ist in einem ersten Abschnitt 61 durch eine Hohlwelle, insbesondere des Getriebes 3, gebildet. Im ersten Ausführungsbeispiel weist der Fadenkanal 60 einen zweiten Abschnitt 62 auf, der durch einen Kunststoffschlauch gebildet ist. In einem dritten Abschnitt 63 ist der Fadenkanal 60 durch die Fadenvorschubeinheit 40 begrenzt. In der Fadenvorschubeinheit 40 wird der Mähfaden 70 durch Führungselemente 54 zur Klemmvorrichtung 50 geführt. Im dritten Abschnitt 63 wirkt die Klemmvorrichtung 50 auf den Umfang des Mähfadens 70 ein. Der Mähfaden 70 wird durch die Fadenvorschubeinheit 40 von dem Fadenspeicher 30 zum Mähkopf 10 oder in umgekehrter Richtung von dem Mähkopf 10 zum Fadenspeicher 30 gefördert. Ein vierter Abschnitt 64 des Fadenkanals 60 erstreckt sich von der Fadenvorschubeinheit 40 zu der zentralen Öffnung 32 im Boden 31 des Fadenspeichers 30. Der vierte Abschnitt 64 des Fadenkanals 60 umfasst einen Fadenfangtrichter 67, der in die Öffnung 32 des Fadenspeichers 30 mündet. Der Fadenfangtrichter 67 fängt ein zweites Ende 72 des Mähfadens 70, das die Fadenvorschubeinheit 40 in Nachfüllrichtung 92 passiert hat, auf und führt es zu der Öffnung 32 des Fadenspeichers 30. Der Fadenfangtrichter 67 ist an dem Boden 31 des Fadenspeichers 30 befestigt, insbesondere einteilig damit ausgebildet.

Die Länge des Fadenkanals 60 zwischen Mähkopf 10 und Fadenvorschubeinheit 40, insbesondere zwischen der Koppelstelle 69 und der Klemmvorrichtung 50, zuzüglich der Länge des Mähkopfkanals 20 entspricht einer nicht mehr mit der Klemmvorrichtung 50 klemmbaren Restlänge des Mähfadens 70. Die Restlänge beträgt weniger als 30 cm. Im ersten Ausführungsbeispiel bestimmen die Längen des ersten Abschnitts 61 des Fadenkanals 60, des zweiten Abschnitts 62 des Fadenkanals 60 und die Länge des Mähkopfkanals 20 die Restlänge des Mähfadens 70. Es kann auch vorgesehen sein, dass der Fadenkanal 60 keinen durch einen Schlauch gebildeten Fadenabschnitt aufweist und der zweite Abschnitt 62 des Fadenkanals 60 dementsprechend durch andere dem Fachmann sinnvoll erscheinende Mittel begrenzt wird.

Um die Restlänge zu verkürzen kann es auch vorgesehen sein, die Fadenvorschubeinheit 40 näher an dem Mähkopf 10 anzuordnen. Insbesondere kann es vorgesehen sein gänzlich auf den zweiten Abschnitt 62 des Fadenkanals 60 zu verzichten und die Fadenvorschubeinheit 40 an die Hohlwelle anschließend anzuordnen, wie beispielsweise im zweiten Ausführungsbeispiel gezeigt wird. Der erste Abschnitt 61 des Fadenkanals 60 würde dann in den dritten Abschnitt 63 des Fadenkanals 60, der durch die Fadenvorschubeinheit 40 gebildet ist, münden.

Zur Steuerung des Betriebs der Fadenvorschubeinheit 40 umfasst der Rasentrimmer 1 eine Steuerung. Die Steuerung umfasst insbesondere eine nicht dargestellte Platine, die am oder im Gehäuse 8 aufgenommen ist. Es kann auch vorgesehen sein, die Platine benachbart zum Akkumulator 5 oder einem Handgriff 2 anzuordnen. Die Steuerung aktiviert den Nachstellmodus, wenn eine Nachstellbedingung erfüllt ist. Eine Nachstellbedingung ist, dass das erste Ende 71 des Mähfadens 70 eine Mindestlänge unterschritten hat. Zur Bestimmung, ob die Mindestlänge unterschritten ist, können verschiedene Methoden eingesetzt werden. Eine Nachstellbedingung kann auch das Vorliegen eines von dem Bediener eingegebenen Nachstellimpulses sein. Die Steuerung deaktiviert den Nachstellmodus, wenn eine Solllänge der aus dem Mähkopf 10 herausragenden Länge des Mähfadens 70 wieder hergestellt ist. Auch alternative Abschaltbedingungen des Nachstellmodus, die beispielsweise durch einen leeren Fadenspeicher 30 ausgelöst werden, können vorgesehen sein.

Der Rasentrimmer 1 umfasst ein Bedienelement 47 (Fig. 1), durch dass der Nachfüllmodus der Fadenvorschubeinheit 40 aktiviert wird. Das Bedienelement 47 ist insbesondere als Taster ausgebildet und für den Bediener zugänglich am oder in räumlicher Nähe zum Gehäuse 8 angeordnet. Durch eine derartige Anordnung ist es dem Bediener möglich während der Betätigung des Bedienelements 47 sowohl den Mähfaden 70 beim Einziehen in die Umfangsöffnung 21 des Mähkopfs 10 als auch die Veränderung des Füllstand des Fadenspeichers 30 zu beobachten. Der Nachfüllmodus wird deaktiviert, sobald der Taster vom Bediener losgelassen wird. Auch alternative Abschaltbedingungen des Nachfüllmodus, die beispielsweise durch einen vollen Fadenspeicher 30 ausgelöst werden, können vorgesehen sein. Es kann auch vorgesehen sein das Bedienelement 47 oder ein redundantes Bedienelement 47 an einer anderen Position, beispielsweise am Handgriff 2, vorzusehen.

In den Fig. 6 bis 8 ist dargestellt, wie der leere Fadenspeicher 30 mit Mähfaden 70 befüllt wird. Hierfür wird zunächst der Freigabemechanismus 55 mittels des Freigabeelements 56 betätigt und dadurch der Abstand der Drehachse 81 der Antriebsrolle 51 zur Drehachse 82 der Rolle 52 vergrößert. Der Freigabemechanismus 55 befindet sich damit in einem aktiven Zustand und die Klemmvorrichtung 50 in einem deaktivierten Zustand. Das zweite Ende 72 des Mähfadens 70 wird in die Umfangsöffnung 21 des Mähkopfs 10 eingesteckt und der Mähfaden 70 vom Bediener eingeschoben bis das zweite Ende 72 des Mähfadens 70 die deaktivierte Klemmvorrichtung 50 passiert hat. Die Führungselemente 54 leiten den Mähfaden 70 in der Fadenvorschubeinheit 40 zwischen die Rolle 52 und die Antriebsrolle 51. Im Ausführungsbeispiel wird das zweite Ende 72 eingeschoben bis der Bediener das zweite Ende 72 des Mähfadens 70 durch den durchsichtigen Deckel 33 des Fadenspeichers 30 hindurch erkennen kann. Der Fadenfangtrichter 67 führt hierbei das zweite Ende 72 von der Klemmvorrichtung 50 in den Fadenspeicher 30 hinein. Danach wird die Klemmvorrichtung 50 aktiviert, in dem das Freigabeelement 56 betätigt und damit der Freigabemechanismus 55 deaktiviert wird. Der Abstand der Drehachse 81 der Antriebsrolle 51 zur Drehachse 82 der Rolle 52 verringert sich und der dazwischen befindliche Abschnitt des Mähfadens 70 wird geklemmt. Durch Betätigung des Bedienelements 47 wird der Nachfüllmodus der Fadenvorschubeinheit 40 aktiviert. Der Vorschubmotor 49 treibt die Antriebsrolle 51 in der zweiten Drehrichtung an, sodass Mähfaden 70 in Nachfüllrichtung 92 in den Mähkopf 10 eingezogen wird. Das zweite Ende 72 des Mähfadens 70 wird hierbei weiter in den Fadenspeicher 30 hinein gefördert und legt sich dadurch an die Umfangswand 34 des Fadenspeichers 30 an. Der auf diese Weise weiterhin in den Fadenspeicher 30 hineingeförderte Mähfaden 70 legt sich in Schlaufen gegen die Umfangswand 34 des Fadenspeichers 30. Ein optional von dem Deckel 33 aus in Richtung zur Öffnung 32 in den Fadenspeicher 30 hineinragender Dorn 35 kann das Anlegen des Mähfadens 70 an der Umfangwand 34 begünstigen. In den Fig. 6 bis 8 ist der Fadenspeicher 30 exemplarisch mit Dorn 35 dargestellt. Der Dorn 35 kann am Deckel 33 ausgebildet oder befestigt sein. Zum Befüllen des Fadenspeichers 30 mit Mähfaden 70 ist ein Öffnen des Fadenspeichers 30 nicht erforderlich, da die Fadenvorschubeinheit 40 den Mähfaden 70 durch dieselbe Öffnung 32 des Fadenspeicher 30 hinein wie auch hinaus fördert. Unabhängig davon kann es vorgesehen sein, den Deckel 33 des Fadenspeichers 30 zu öffnen, um den Fadenspeicher 30 auf diese Weise mit neuem Mähfaden 70 zu bestücken. Bei einer derartigen Befüllung ist das erste Ende 71 des Mähfadens 70 schließlich von dem Bediener durch die Öffnung 32 hindurch bis in die Fadenvorschubeinheit 40 einzuführen. Der Deckel 33 ist insbesondere werkzeuglos öffenbar. Insbesondere ist der gesamte Deckel 33 von dem Fadenspeicher 30 abnehmbar, insbesondere aufklappbar oder abschraubbar. Dadurch wird die Entnahme von noch im Fadenspeicher 30 befindlichem gegen die Umfangswand 34 aufgewickelten Mähfaden 70 erleichtert. Dies kann erforderlich werden, wenn aufgrund einer neuen Arbeitsaufgabe ein anderer Mähfaden 70 verwendet werden soll.

Die Fig. 9 und 10 zeigen den Mähkopf 10 im Detail. Der Mähkopf 10 umfasst in axialer Richtung bzgl. der Rotationsachse 80 ein dem Erdboden zugewandtes Unterteil 11, ein Mittelteil 12 und ein dem Gehäuse 8 zugewandtes Oberteil 13. Das Mittelteil 12 ist sandwichartig zwischen dem Unterteil 11 und dem Oberteil 13 angeordnet. Eine Unterseite des Unterteil 11 kommt im Betrieb des Rasentrimmers 1 mit dem Erdboden in Kontakt. Das Unterteil 11 ist insbesondere aus einem Kunststoff hergestellt. An einer Oberseite des Unterteils 11 ist das Mittelteil 12 angeordnet. Das Mittelteil 12 ist aus einem metallischen Werkstoff, insbesondere in einem Druckguss- oder Sinterverfahren, hergestellt. In dem Mittelteil 12 ist der Mähkopfkanal 20 ausgebildet. Das Mittelteil 12 begrenzt den Mähkopfkanal 20. Dadurch, dass das der Mähkopfkanal 20 von einem metallischen Werkstoff begrenzt wird, verschleißt der Mähkopfkanal 20 weniger stark. Im Betrieb des Mähkopfs 10 erwärmen sich der im Mähkopf 10 befindliche Mähfaden 70 und der Mähkopfkanal 20 durch die Wechselwirkung miteinander. Dadurch, dass das Mittelteil 12 aus einem metallischen Werkstoff gebildet ist, wirkt es als Kühlkörper für den Mähkopfkanal 20. Eine übermäßige Erhitzung des Mähkopfkanals 20, die mit einer Erweichung des Mähfadens 70 einhergeht, ist vermieden. Um die Kühlung des Mähkopfkanals 20 noch weiter zu verbessern ist im Ausführungsbeispiel vorgesehen, dass das Oberteil 13 Lüfterschaufeln und Lüftungsöffnungen trägt, durch die Kühlluft entlang des Mittelteils 12 geleitet wird. Es kann auch ein separat vom Mähkopf 10 ausgebildetes Lüfterrad vorgesehen sein.

Der Mähkopfkanal 20 umfasst einen bezüglich der Rotationsachse 80 axialen Abschnitt 23, einen radialen Abschnitt 25 und einen dazwischenliegenden bogenförmigen Abschnitt 24. An dem axialen Abschnitt 23 geht der Mähkopfkanal 20 in den Fadenkanal 60 über. Der radiale Abschnitt 25 mündet in die Umfangsöffnung 21. Der Mähkopfkanal 20 erweitert sich in dem radialen Abschnitt 25 mit zunehmendem radialen Abstand von der Rotationsachse 80 in etwa trompetenförmig. An der Umfangsöffnung 21 weist der Mähkopfkanal 20 seine größte Erstreckung auf. An der Umfangsöffnung 21 erstreckt sich der Mähkopfkanal 20 über einen Umfangswinkel β bzgl. der Rotationsachse 80 von mehr als 20°, insbesondere mehr als 30°, ganz insbesondere mehr als 40°, und insbesondere höchstens 80°. Durch die Erweiterung des Mähkopfkanals 20 an der Umfangsöffnung 21, kann der Mähfaden 70 bei Kontakt mit einem Hindernis zunächst innerhalb der Umfangsöffnung 21 ausweichen, bevor er mit einem bzgl. der Antriebsrichtung nachlaufenden Rand der Umfangsöffnung 21 in Kontakt kommt. Dadurch ist die Biegebelastung auf den Mähfaden 70 am Rand der Umfangsöffnung 21 reduziert und ein Abreißen des Mähfadens 70 an der Umfangsöffnung 21 kann weitestgehend vermieden werden.

Im Ausführungsbeispiel besitzt der Mähkopf 10 genau einen Mähkopfkanal 20. Zum Kräfteausgleich ist gegenüberliegend zur Umfangsöffnung 21 ein Ausgleichsgewicht 16 am Mähkopf 10 angeordnet. Das Ausgleichsgewicht 16 ist insbesondere metallisch. Das Ausgleichsgewicht 16 ist insbesondere einteilig mit dem Mittelteil 12 ausgebildet. Dadurch ist die Positionierung des Ausgleichsgewichts 16 am Mähkopf 10 vereinfacht. Weiterhin trägt auch das Ausgleichsgewicht 16 zur Kühlung des Mähkopfkanals 20 bei. Im Ausführungsbeispiel erweitert sich das Ausgleichsgewicht 16 mit zunehmendem radialen Abstand von der Rotationsachse 80, bis es an seinem äußeren Umfang eine maximale Erstreckung aufweist. Das Ausgleichsgewicht 16 erstreckt sich insbesondere über einen Umfangswinkel γ bzgl. der Rotationsachse 80 von mehr als 20°, insbesondere mehr als 30°, ganz insbesondere mehr als 40°, und insbesondere höchstens 80°. Auf diese Weise spannt das Ausgleichsgewicht 16 eine vergleichsweise große Kühlfläche am Außenumfang des Mähkopfs 10 auf.

Das Mittelteil 12 umfasst im Ausführungsbeispiel ein erstes Teil 14 und ein zweites Teil 15, die gemeinsam einen Abschnitt des Mähkopfkanals 20 begrenzen. Dadurch lässt sich der Mähkopfkanal 20 besonders einfach und kostengünstig herstellen. Insbesondere ist das Ausgleichsgewicht 16 einteilig mit dem ersten Teil 14 oder dem zweiten Teil 15 des Mittelteils 12 ausgebildet. Dadurch lässt sich auf einfache Weise eine effektive wärmeleitende Verbindung zwischen dem Ausgleichsgewicht 16 und dem Mähkopfkanal 20 herstellen.

Das Mittelteil 12 weist einen zentralen Dom 17 auf, in dem der axiale Abschnitt 23 und der bogenförmige Abschnitt 24 des Mähkopfkanals 20 angeordnet ist. Von dem Dom 17 aus erstrecken sich in oder parallel zu einer Schnittebene 85 des Mähfadens 70 das Ausgleichsgewicht 16 und der radiale Abschnitt 25 des Mähkopfkanals 20 mit der Umfangsöffnung 21. Das Ausgleichsgewicht 16 und die Umfangsöffnung 21 liegen einander bzgl. der Rotationsachse 80 gegenüber. In Umfangsrichtung zwischen dem Ausgleichsgewicht 16 und der Umfangsöffnung 21 ist jeweils ein Freiraum 18 des Mittelteils 12 vorgesehen, in dem das Oberteil 13 und das Unterteil 11 direkt aneinander angrenzen. Das Oberteil 13 und das Unterteil 11 sind insbesondere in dem Freiraum 18 des Mittelteils 12 miteinander gefügt, insbesondere verschraubt oder verclipst. Das Unterteil 11 weist insbesondere einen Hohlraum auf, der von dem Mittelteil 12, und abseits des Mittelteils 12 von dem Oberteil 13, abgedeckt wird.

Wie die Fig. 11 bis 15 zeigen, weist die zweite Ausführungsform des Rasentrimmers 1 ein Freigabeelement 56 auf, das als schwenkbarer Bedienhebel ausgebildet ist. Durch Betätigung des Bedienhebels wird der erste Arm 57 des Hebels entgegen einer Federkraft, die auf den zweiten Arm 58 des Hebels wirkt, verschwenkt. Die am ersten Arm 57 gelagerte Rolle 52 entfernt sich dadurch von der Antriebsrolle 51, wodurch eine Klemmkraft reduziert bzw. aufgehoben wird. Der Bedienhebel lässt sich insbesondere in eine Raststellung bringen, in der die Klemmvorrichtung 50 durch den Freigabemechanismus 55 deaktiviert ist und der Bedienhebel von dem Gehäuse 8 absteht. Der abstehende Bedienhebel signalisiert dem Bediener damit auf einfache Weise den inaktiven Zustand der Klemmvorrichtung 50.

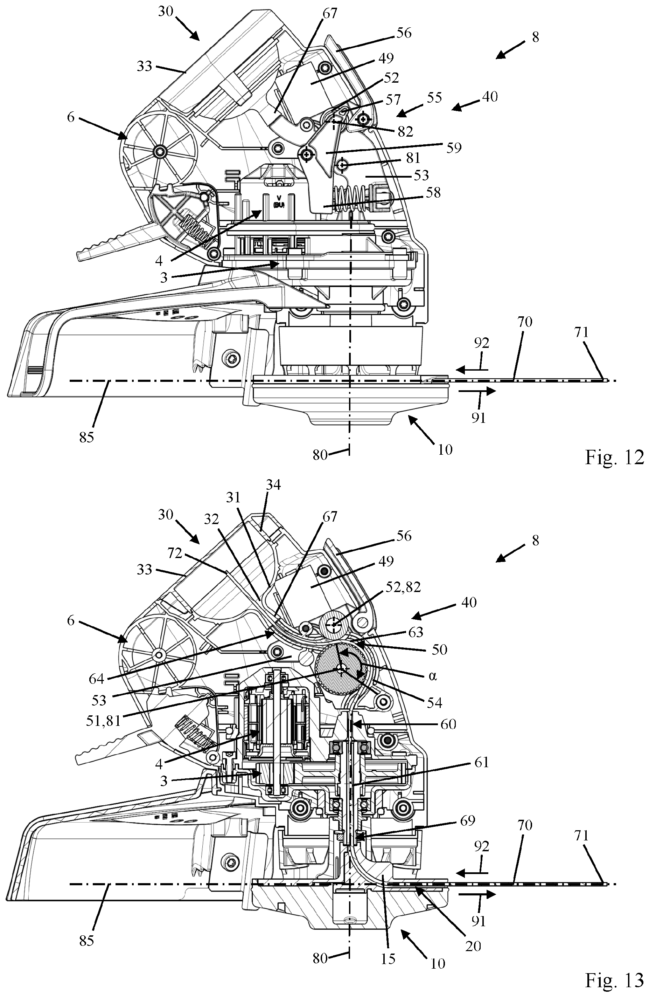

Wie Fig. 13 zeigt, ist der Umschlingungswinkel α des Mähfadens 70 gegenüber dem ersten Ausführungsbeispiel noch weiter erhöht. Insbesondere sind die Führungselemente 54 der Fadenvorschubeinheit 40 derart angeordnet, dass der Mähfaden 70 die Antriebsrolle 51 um mehr als 60°, insbesondere mehr als 90° umschlingt. Im Betrieb des Rasentrimmers 1 wirkt eine Zugkraft auf das erste Ende 71 des Mähfadens 70, durch die der Mähfaden 70 zwischen der Klemmstelle, also zwischen Antriebsrolle 51 und Rolle 52, und dem ersten Ende 71 gestrafft wird. Dabei wird der Mähfaden 70 über den Umfang der Antriebsrolle 51 gespannt. Dadurch, dass der Mähfaden 70 über mehr als ein Sechstel, insbesondere mehr als ein Viertel des Umfangs der Antriebrolle 51 an der Antriebsrolle 51 anliegt, ist die Reibung zwischen Mähfaden 70 und Antriebsrolle 51 erhöht. Wie Fig. 13 ebenfalls zeigt, beträgt ein Durchmesser der Antriebsrolle 51 mindestens das 10-fache, insbesondere mindestens das 15-fache des Durchmessers des Mähfadens 70. Auf diese Weise lässt sich der Mähfaden 70 trotz des größeren Umschlingungswinkels α vergleichsweise leicht in und durch den dritten Kanalabschnitt 63 schieben. Der verhältnismäßig große Durchmesser der Antriebsrolle 51 trägt auch dazu bei, dass sich die Klemmkraft über mehrere Zähne der Antriebsrolle 51 verteilt und dadurch schonender auf den Umfang des Mähfadens 70 überträgt. Dies erhöht die Haltbarkeit des Mähfadens 70. Wie ebenso in Fig. 13 gezeigt ist, erstreckt sich die Umfangswand 34 des Fadenspeichers 30 zu einem erheblichen Anteil im transparenten Deckel 33. Da der Faden gegen die Umfangswand 34 gewickelt ist, lässt sich dadurch noch besser erkennen, wenn der Fadenspeicher 30 leer wird. Um die Haltbarkeit des Mähfadens 70 noch weiter zu erhöhen, kann es vorgesehen sein, an dem zweiten Teil 15 des Mittelteils 12 des Mähkopfs 10 integrale Rippen zur Kühlung vorzusehen.

Es versteht sich von selbst, dass die Merkmale der Ausführungsbeispiele miteinander kombiniert und abgewandelt werden können. Es kann beispielsweise vorgesehen sein, dass der vierte Kanalabschnitt 64 einen biegsamen Schlauch umfasst. Weiterhin kann vorgesehen sein, dass anstelle oder zusätzlich zu der Rolle 52, die Antriebsrolle 51 durch den Freigabemechanismus bewegt wird.

## Patentansprüche

1. Rasentrimmer (1) umfassend,
- einen um eine Rotationsachse (80) antreibbaren Mähkopf (10) zum Schneiden von Vegetation mittels eines aus dem Mähkopf (10) herausragenden ersten Endes (71) eines Mähfadens (70),
- einen Antriebsmotor (4) zur Rotation des Mähkopfs (10) um die Rotationsachse (80),
- einen Fadenspeicher (30) zur Aufnahme eines Vorrats des Mähfadens (70), wobei der Fadenspeicher (30) außerhalb des Mähkopfs (10) an dem Rasentrimmer (1) angeordnet ist,
- einen Fadenkanal (60) zur Führung des Mähfadens (70) zwischen dem Mähkopf (10) und dem Fadenspeicher (30), wobei der Fadenkanal (60) ausgebildet ist, ein zweites Ende (72) des Mähfadens (70), das in den Mähkopf (10) eingeführt wird, bis in den Fadenspeicher (30) zu führen,
- eine Fadenvorschubeinheit (40), die ausgebildet ist, auf einen zwischen dem Fadenspeicher (30) und dem Mähkopf (10) befindlichen Abschnitt (63) des Mähfadens (70) einzuwirken, wobei die Fadenvorschubeinheit (40) einen Nachstellmodus, einen Nachfüllmodus und einen Inaktivitätsmodus aufweist, wobei im Nachstellmodus Mähfaden (70) aus dem Fadenspeicher (30) zu dem Mähkopf (10) in einer Nachstellrichtung (91) gefördert wird und wobei im Nachfüllmodus Mähfaden (70) aus dem Mähkopf (10) zu dem Fadenspeicher (30) in einer Nachfüllrichtung (92) gefördert wird und wobei im Inaktivitätsmodus eine Förderung des Mähfadens (70) deaktiviert ist,
- eine Steuerung, die den Betrieb der Fadenvorschubeinheit (40) steuert,
- ein Bedienelement (47), durch das der Nachfüllmodus der Fadenvorschubeinheit (40) aktiviert wird.

2. Rasentrimmer (1) nach dem vorhergehenden Anspruch, **dadurch gekennzeichnet, dass** der Fadenkanal (60) mindestens in einem Abschnitt (62) seiner Länge aus einem biegsamen Schlauch gebildet ist.

3. Rasentrimmer (1) nach einem der vorhergehenden Ansprüche, **dadurch gekennzeichnet, dass** der Fadenspeicher (30) einen Boden (31) mit einer Öffnung (32), einen dem Boden (31) gegenüberliegenden Deckel (33) und eine sich zwischen dem Boden (31) und dem Deckel (33) erstreckende Umfangswand (34) aufweist und frei von einer Fadenspule ist.

4. Rasentrimmer (1) nach einem der vorhergehenden Ansprüche, **dadurch gekennzeichnet, dass** an einem Abschnitt (64) des Fadenkanals (60), der sich zwischen der Fadenvorschubeinheit (40) und dem Fadenspeicher (30) erstreckt, benachbart zu der Fadenvorschubeinheit (40) ein Fadenfangtrichter (67) angeordnet ist und der Fadenfangtrichter (67) ausgebildet ist, das im Nachfüllmodus aus der Fadenvorschubeinheit (40) austretende zweite Ende (72) des Mähfadens (70) aufzufangen und in den Fadenkanal (60) bzw. den Fadenspeicher (30) zu leiten.

5. Rasentrimmer (1) nach einem der vorhergehenden Ansprüche, **dadurch gekennzeichnet, dass** der Fadenkanal (60) eine Länge von weniger als 30 cm, insbesondere von weniger als 20 cm, zwischen dem Mähkopf (10) und der Fadenvorschubeinheit (40) aufweist.

6. Rasentrimmer (1) nach einem der vorhergehenden Ansprüche, **dadurch gekennzeichnet, dass** der Rasentrimmer (1) ein Führungsrohr (7) aufweist, an dessen benutzerfernen Ende ein Gehäuse (8) angeordnet ist, wobei die Fadenvorschubeinheit (40) in oder an dem Gehäuse (8) angeordnet ist.

7. Rasentrimmer (1) nach einem der vorhergehenden Ansprüche, **dadurch gekennzeichnet, dass** der Fadenspeicher (30) in oder an dem Gehäuse (8) angeordnet ist.

8. Rasentrimmer (1) nach einem der vorhergehenden Ansprüche, **dadurch gekennzeichnet, dass** die Fadenvorschubeinheit (40) eine Klemmvorrichtung (50) umfasst, die mindestens eine von einem Vorschubmotor (49) angetriebene Antriebsrolle (51) und einen Gegenhalter (52) umfasst und ausgebildet ist, im Inaktivitätsmodus der Fadenvorschubeinheit (40) eine Auszugskraft des Mähfadens (70) aus dem Mähkopf (10) von mindestens 100 N bereitzustellen.

9. Rasentrimmer (1) nach einem der vorhergehenden Ansprüche, **dadurch gekennzeichnet, dass** die Fadenvorschubeinheit (40) ein Führungselement (54) umfasst, das das in Nachfüllrichtung (92) in den Mähkopf (10) eingeführte zweite Ende (72) des Mähfaden (70) durch die Fadenvorschubeinheit (40) führt, insbesondere um einen Umschlingungswinkel (α) um eine Antriebsrolle (51) herumführt.

10. Rasentrimmer (1) nach einem der vorhergehenden Ansprüche, **dadurch gekennzeichnet, dass** die Fadenvorschubeinheit (40) einen Freigabemechanismus (55) umfasst, durch den eine Einwirkung der Fadenvorschubeinheit (40), insbesondere eine Klemmkraft einer Klemmvorrichtung (50), auf den Mähfaden (70) aufgehoben wird.

11. Rasentrimmer (1) nach Anspruch 3, **dadurch gekennzeichnet, dass** sich mittig im Fadenspeicher (30) ein Dorn (35) in Richtung auf die Öffnung (32) in den Fadenspeicher (30) hinein erstreckt.

12. Verfahren zur Wiederbefüllung eines Fadenspeichers (30) eines Rasentrimmers (1) nach einem der vorhergehenden Ansprüche, umfassend die Schritte:
- die Steuerung erfasst, ob das Bedienelement (47) betätig ist, und aktiviert bei betätigtem Bedienelement (47) den Nachfüllmodus,
- die Fadenvorschubeinheit (40) fördert Mähfaden (70) vom Mähkopf (10) aus in Nachfüllrichtung in den Fadenspeicher (30).

13. Verfahren nach Anspruch 12, **dadurch gekennzeichnet, dass** die Betätigung des Bedienelements (47) durch den Bediener erfolgt.

14. Verfahren nach Anspruch 12, **dadurch gekennzeichnet, dass** die Betätigung des Bedienelements mittelbar durch den Bediener durch das Einschieben des zweiten Endes (72) des Mähfadens (70) in den Fadenkanal erfolgt.

15. Verfahren nach einem der Ansprüche 12 bis 14, **dadurch gekennzeichnet, dass** die Steuerung den Nachfüllmodus beendet, wenn eine Abschaltbedingung erfüllt ist, wobei die Abschaltbedingung insbesondere ein Loslassen oder ein erneutes Betätigen des Bedienelement (47) ist und/oder ein Erreichen bzw. Überschreiten einer in den Fadenspeicher (30) geförderten Fadenlänge im Vergleich zu einer maximal im Fadenspeicher (30) speicherbaren Fadenlänge.
